# FASCICULE DE BREVET EUROPEEN

(11) **EP 0 343 058 B1**
(45) Date de publication et mention de la délivrance du brevet: **04.08.1993**
(21) Numéro de dépôt: 89401343.2
(22) Date de dépôt: 12.05.1989
(51) Int. Cl.: B60B 37/10, B60B 27/00, G01P 3/48, F16C 19/52, B60B 35/18

(54) **Montage de moyeu de roue non motrice de véhicule équipé d'un dispositif à pulseur et capteur pour mesure de la vitesse de rotation de la roue**
Mit einem Pulsgenerator und Sensor ausgestattete nichtangetriebene Kraftfahrzeugnabe, um die Drehzahl des Rades zu messen
Hub assembly of a non-driven vehicle wheel equipped with an emitter and receiver for measuring the angular speed of the wheel

(30) Priorité: 19.05.1988 FR 8806720
(43) Date de publication de la demande: 23.11.1989
(73) Titulaire: SKF FRANCE, F-92142 Clamart Cédex (FR)
(72) Inventeur: Descombes, Michel, F-78000 Versailles (FR)
(74) Mandataire: Casalonga, Axel

(56) Documents cités:
- EP-A- 0 020 204
- EP-A- 0 136 493
- FR-A- 2 424 136
- US-A- 3 928 780

## Description

L'invention concerne le montage d'un moyeu de roue non motrice de véhicule équipé d'un dispositif pulseur et capteur pour mesure de la vitesse de rotation de la roue.

Un tel montage est déjà décrit dans la demande de brevet européen EP-A-0 317 423 au nom de la demanderesse non publiée antérieurement. Dans ce dispositif antérieur, le roulement intégré est immobilisé axialement sur la fusée par serrage axial des bagues intérieures du roulement entre un épaulement de la fusée et un écrou de blocage situé du côté de la roue du véhicule, à l'intérieur du roulement. Cette disposition de l'écrou de blocage présente plusieurs inconvénients, notamment celui d'occuper un espace important à l'intérieur du volume disponible à l'intérieur du roulement, ce qui implique l'utilisation de capteurs miniaturisés pour la mesure de la vitesse de la roue. En outre, le capteur et sa connexion, ainsi que le capot de fermeture, doivent nécessairement être mis en place après le serrage de cet écrou de blocage, donc après montage du moyeu sur le véhicule.

La demande de brevet européen EP-A-0 020 204 (RNUR) décrit un montage dans lequel la fusée comporte une tête située du côté du porte-fusée. Le montage se fait donc en montant tout d'abord la fusée dans le porte-fusée, puis la roue autour de l'extrémité filetée dépassante de la fusée, les bagues intérieures du roulement étant ensuite bloquées par un écrou situé du côté de la roue.

Le brevet US-A-3 928 780 décrit un montage de moyeu de roue équipé d'un ensemble pulseur-capteur situé à l'extérieur du roulement et dans lequel la fusée est tout d'abord montée dans un porte-fusée puis la roue est montée sur l'extrémité dépassante de la fusée et maintenue axialement en place à l'aide d'un écrou situé du côté de la roue et se vissant sur l'extrémité filetée de la fusée.

Le but de l'invention est d'éliminer les inconvénients de l'état de la technique et notamment de laisser plus de place disponible dans le moyeu pour le capteur, et de permettre le montage de ce capteur et du capot de fermeture préalablement à la mise en place de l'ensemble sur le véhicule.

Tel qu'il est revendiqué, le montage du moyeu de roue non motrice de véhicule équipé d'un ensemble pulseur et de capteur pour la détection de la vitesse de la roue selon l'invention, comporte un roulement intégré à deux rangées d'éléments roulants situées entre deux bagues intérieures de roulement et une bague extérieure constituant le moyeu de fixation de la roue et éventuellement du disque de freinage. Le dégagement intérieur du moyeu comporte à la fois un pulseur et un capteur enfermés dans ce dégagement à l'aide d'un capot de fermeture, avec en outre un moyen de blocage de l'ensemble des deux bagues intérieures sur la fusée.

Selon l'invention, la fusée comporte à son extrémité située du côté de la roue une collerette d'épaulement appuyant sur une des bagues intérieures, et à son autre extrémité une partie filetée permettant, à l'aide d'un écrou de blocage, d'assurer tout à la fois le serrage des deux bagues intérieures contre le porte-fusée, et le montage de la fusée dans ce porte-fusée après avoir introduit cette fusée déjà équipée de son roulement à travers le porte-fusée.

Grâce à cette disposition et au plus grand espace disponible à l'intérieur du moyeu, le capteur n'a plus besoin d'être miniaturisé, et il peut être monté à l'avance avec son embout de connexion dans l'axe de la fusée.

Le capot de fermeture peut également être monté à l'avance en atelier, et il peut avantageusement être intégré avec le pulseur.

D'autres particularités de l'invention apparaîtront dans la description qui va suivre de divers modes de réalisation pris comme exemples et représentés sur le dessin annexé, sur lequel :
la figure 1 est une coupe axiale d'un premier mode de réalisation;
la figure 2 est une coupe axiale correspondante d'un second mode de réalisation;
la figure 3 est une vue en bout du capteur correspondant;
la figure 4 est une coupe axiale d'un troisième mode de réalisation;
la figure 5 est une vue en bout du capteur correspondant;
la figure 6 est une coupe axiale d'un dernier mode de réalisation;
la figure 7 est une vue de détail à plus grande échelle d'un fragment de la figure 6; et
la figure 8 est une vue de face agrandie d'un fragment du pulseur correspondant.

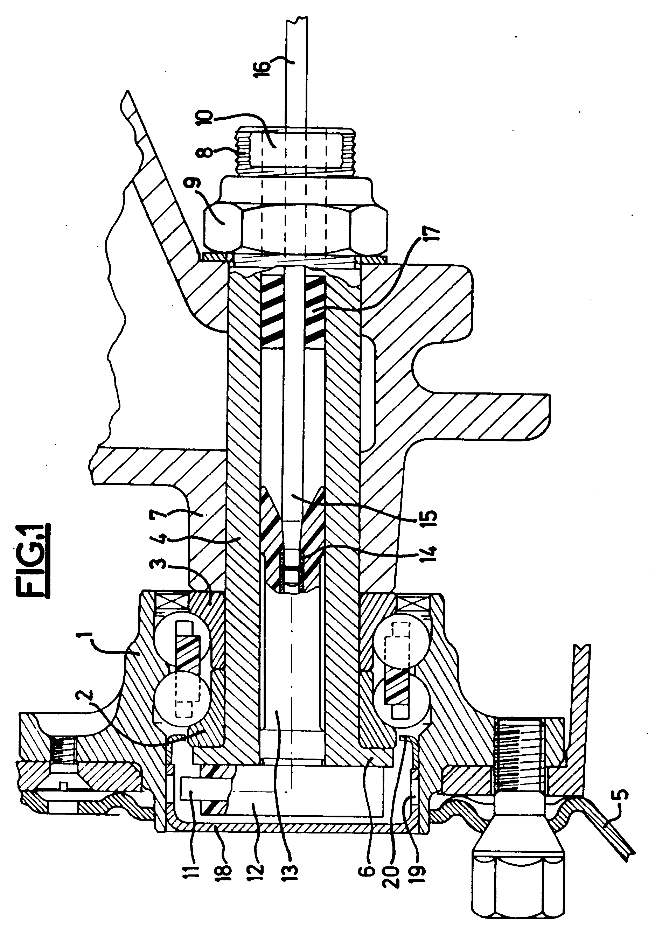

On voit sur la figure 1 le roulement intégré, qui est du même type que dans la demande de brevet précitée, et qui comprend, notamment, une bague extérieure 1 formant moyeu et deux bagues intérieures 2 et 3. La différence essentielle est que, conformément à l'invention, la fusée 4 comporte à son extrémité du côté de la roue 5, une collerette d'épaulement 6, de faible encombrement, venant resserrer l'ensemble des bagues intérieures 2 et 3 contre le porte-fusée 7. Pour cela, l'autre extrémité de la fusée 4 comporte une partie filetée 8 sur laquelle peut se visser un écrou de blocage 9. Pour permettre l'immobilisation en rotation de la fusée 4 pendant le serrage de cet écrou 9, on peut utiliser, par exemple, des plats 10.

La première conséquence est que l'on peut disposer à l'intérieur du moyeu 1 d'un espace beaucoup plus important pour loger le capteur 11, qui, de ce fait, n'a pas besoin d'être miniaturisé, mais peut, au contraire, être constitué par un capteur usuel de plus grande dimension qui, dans l'état actuel de la technique, est beaucoup moins cher, moins fragile et plus facile à mettre en place que les capteurs miniaturisés.

En particulier, ce capteur 11 peut avantageusement être intégré dans un bouchon porte-capteur 12 en matière plastique se prolongeant dans l'axe de la fusée par une queue 13 dans l'extrémité de laquelle est intégrée une prise femelle 14 pour une fiche 15 de connexion, améliorant et facilitant la connexion électrique du capteur 11 une fois l'ensemble monté sur le véhicule, à l'aide d'un câble de jonction 16 terminé par la fiche 15. Un bouchon en élastomère 17, surmoulé ou collé sur le fil 16, permet d'assurer l'étanchéité et d'améliorer la fixation.

Grâce également à cette disposition, l'ensemble de la fusée, du capteur 11 et du bouchon porte-capteur 12, avec sa connexion 14, et également le capot de fermeture 18 du moyeu, peuvent être intégrés à l'avance dans l'ensemble du montage destiné à être mis en place sur le véhicule, ce qui facilité à la fois la fabrication et la mise en place finale.

Le pulseur 19 peut avantageusement être usiné dans le capot de protection 18, si celui-ci est en matériau ferromagnétique, en y découpant simplement dans sa partie cylindrique une série d'orifices rectangulaires, comme dans les exemples des figures 1, 2 et 4.

Une pièce de fermeture 20 peut en outre être emmanchée dans le moyeu 1 pour ne laisser subsister qu'un intervalle étroit entre sa partie radiale et la périphérie de la bague intérieure de roulement 2, afin d'assurer une meilleure retenue de la graisse du roulement.

Dans l'exemple représenté sur la figure 1, la fixation du porte-capteur 12, réalisé comme on l'a vu en matière plastique moulée, ainsi que sa queue 13, est assurée par simple emmanchement dans l'alésage intérieur de la fusée 4.

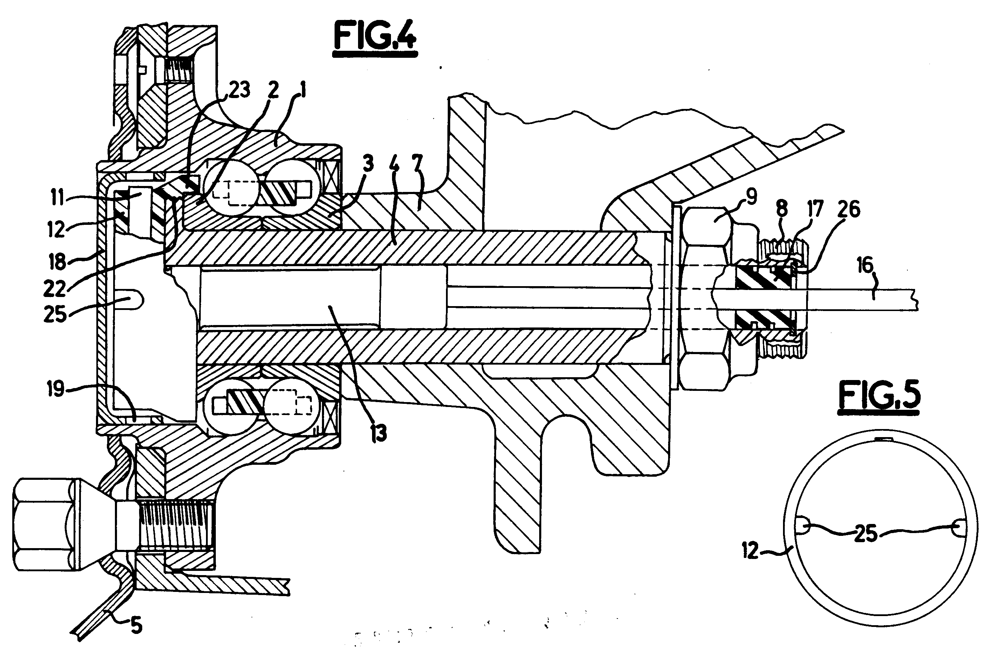

Dans la variante des figures 2 et 4, cette fixation est assurée par vissage, respectivement d'une partie filetée 21 se vissant à l'intérieur de l'alésage de la fusée 4, dans l'exemple de la figure 2, ou une partie filetée 22 se vissant à l'extérieur de la collerette 6 dans l'exemple de la figure 4.

En outre, dans ces deux exemples, le porte-capteur 12 peut avantageusement comporter une périphérie enveloppante 23 assurant la même fonction que la pièce de retenue 20 de la figure 1, excepté que l'intervalle étroit assurant la retenue de la graisse se trouve sur l'extérieur, puisque cette partie est non tournante.

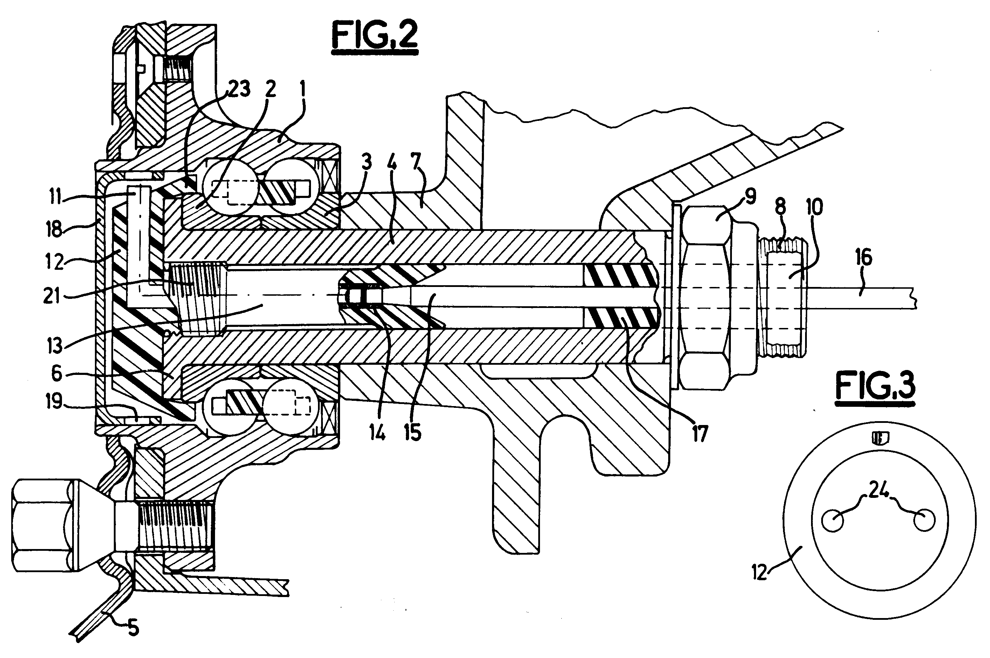

Pour assurer le vissage du porte-capteur 12 dans ces deux derniers exemples, on peut par exemple utiliser une clef à ergots pénétrant dans des orifices 24 comme représenté sur la figure 3, ou des encoches 25 comme représenté sur les figures 4 et 5.

En outre, dans l'exemple de la figure 4, on a montré comment on peut améliorer la retenue mécanique du bouchon d'étanchéité 17 à l'aide d'un circlip 26 se logeant dans une gorge usinée dans l'alésage intérieur de la fusée 4, près de l'extrémité filetée 8. Cette dernière solution permet d'éviter positivement tout arrachage accidentel du fil 16.

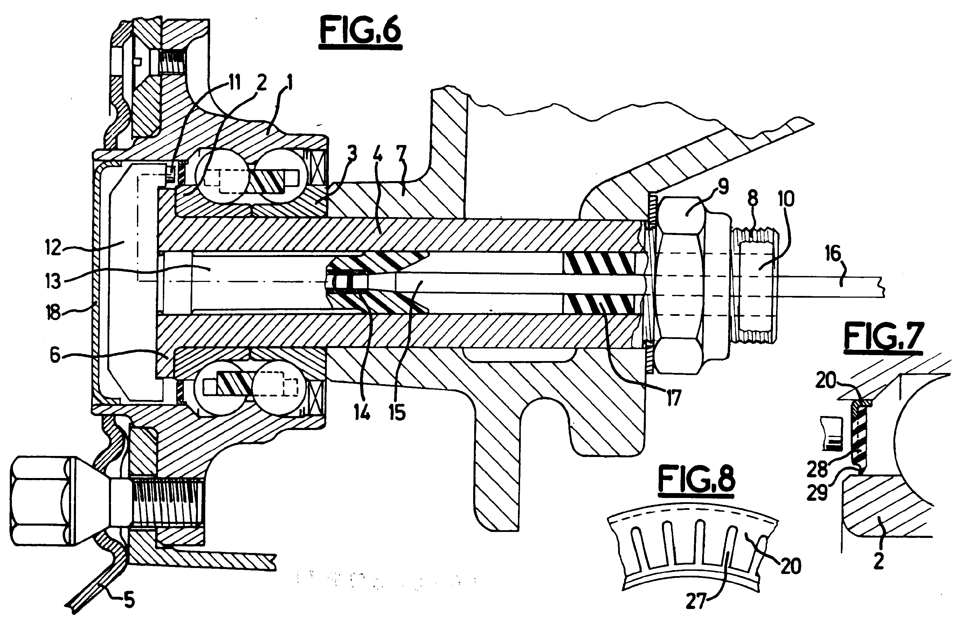

Enfin, dans l'exemple de réalisation de la figure 6, le pulseur n'est plus intégré au capot de fermeture 18, mais au contraire à la pièce de fermeture 20, en utilisant dans ce cas un capteur 11 orienté parallèlement à l'axe du porte-capteur 12 pour venir détecter les encoches 27 découpées dans la partie radiale de la pièce 20. Dans ce cas, pour que cette pièce continue à assurer sa fonction de fermeture et de retenue de la graisse, on peut avantageusement lui surmouler une partie 28 en élastomère qui vient obturer toutes les encoches 27, et vient en outre constituer une véritable lèvre d'étanchéité 29 portant sur la bague intérieure 2 comme représenté sur la figure 7.

Dans tous les cas, l'invention permet ainsi d'améliorer à la fois les coûts de production et de montage, en même temps que la fiabilité de l'ensemble une fois monté sur le véhicule.

## Revendications

1. "Montage de moyeu de roue non motrice de véhicule équipé d' un ensemble de pulseur et de capteur pour la détection de la vitesse de la roue, comportant un roulement intégré (1, 2, 3) à deux rangées d' éléments roulants situées entre deux bagues intérieures de roulement (2, 3) et une bague extérieure (1) constituant le moyeu de fixation de la roue et éventuellement du disque de freinage, le dégagement intérieur de ce moyeu (1) comportant à la fois un pulseur (19, 20) et un capteur (11) enfermés dans ce dégagement à l' aide d' un capot de fermeture (18), avec en outre un moyen de blocage (9) de l' ensemble des deux bagues intérieures (2, 3) sur la fusée (4),
caractérisé par le fait que
la fusée (4) comporte à son extrémité située du côté de la roue (5) une collerette d' épaulement (6) appuyant sur une (2) des bagues intérieures, et à son autre extrémité une partie filetée (8) permettant, à l' aide d' un écrou de blocage (9), d' assurer tout à la fois le serrage des deux bagues intérieures (2, 3) contre le porte-fusée (7), et le montage de la fusée (4) dans ce porte-fusée (7) après avoir introduit cette fusée (4) déjà équipée de son roulement à travers le porte-fusée (7)."

2. Montage selon la revendication 1, caractérisé par le fait que la capteur (11) est disposé radialement ou parallèlement à l'axe dans un porte-capteur (12) monté directement sur la fusée dans le prolongement de celle-ci.

3. Montage selon la revendication 2, caractérisé en ce que le porte-capteur (12) est prolongé par une queue (13) destinée à venir se monter dans l'alésage intérieur que comporte la fusée (4), cette queue (13) étant terminée à son extrémité par un connecteur électrique femelle (14) pour une fiche de connexion (15) fixée au bout d'un câble de connexion (16).

4. Montage selon la revendication 3, caractérisé par le fait qu'un bouchon (17) en élastomère est surmoulé ou collé sur le câble de connexion (16) pour venir se placer dans l'alésage de la fusée (4), avec de préférence un moyen de retenue axiale (26).

5. Montage selon une des revendications 2, 3 et 4, caractérisé par le fait que la fixation du porte-capteur (12) sur la fusée (4) est assurée par emmanchement de sa queue (13) dans l'alésage de la fusée, ou encore par vissage de l'ensemble dans la fusée ou sur l'extérieur de celle-ci.

6. Montage selon une des revendications précédentes, caractérisé par le fait qu'il comporte une pièce de fermeture tournante (20) ou fixe (23) comblant l'espace entre le moyeu (1) et la bague intérieure (2) du côté correspondant, excepté un faible intervalle permettant la rotation relative des éléments tout en assurant la retenue de la graisse du roulement.

7. Montage selon la revendication 6, caractérisé par le fait que la pièce de fermeture (23) fait partie intégrante du porte-capteur (12).

8. Montage selon une des revendications précédentes, caractérisé par le fait que le capteur (11) est de type radial, et que le pulseur (19) et le capot de fermeture (18) venant refermer le moyeu (1) ne forment qu'une seule et même pièce.

9. Montage selon une des revendications 1 à 7 caractérisé par le fait que le capteur (11) est de type parallèle à l'axe et que son pulseur (27) est intégré à la pièce de fermeture (20) qui est alors du type tournant.

10. Montage selon la revendication 9, caractérisé par le fait que la pièce métallique de fermeture (20) dans laquelle sont découpées les encoches (27) pour constituer le pulseur, se trouve insérée dans une pièce (28) d'élastomère surmoulé assurant la continuité de la fermeture et comportant de préférence une lèvre d'étanchéité (29) au contact de la bague intérieure (2) du roulement.

11. Montage selon une des revendications précédentes, caractérisé par le fait que tout l'ensemble du montage, y compris la fusée (4), le capteur (11) et le porte-capteur (12), ainsi que le capot de fermeture (18) et autre pièce éventuelle de montage, est intégré par avance pour une mise en place rapide sur le porte-fusée (7) du véhicule à l'aide de l'écrou de blocage (9), l'extrémité filetée (8) comportant alors avantageusement un moyen d'immobilisation en rotation constitué par exemple par des plats (10).

## Patentansprüche

1. Nabenaufbau eines nicht angetriebenen Fahrzeugrades, das mit einer Anordnung, bestehend aus einem lmpulsgeber und einem Sensor zur Erfassung der Raddrehzahl ausgestattet ist, wobei der Aufbau eine eingebautes Wälzlager (1, 2, 3) mit zwei Reihen von Rollelementen zwischen zwei inneren Wälzlagerringen (2, 3) und einem äußeren Ring (1) umfaßt, die die Befestigungsnabe des Rades und gegebenenfalls der Bremsscheibe bilden, wobei der innere Freiraum der Nabe (1) zugleich einen Impulsgeber (19, 20) und einen Sensor (11) aufweist, die im Freiraum durch eine Verschlußkappe (18) eingeschlossen sind, und wobei der Aufbau weiter ein Mittel (9) zum Blockieren der aus den beiden inneren Ringen (2, 3) bestehenden Baueinheit auf dem Achsrohr (4) umfaßt,
dadurch **gekennzeichnet**,
daß das Achsrohr (4) an seinem auf seiten des Rades (5) befindlichen Ende einen Schulterkragen (6), der sich an einen (2) der beiden inneren Ringe anlegt, und an seinem anderen Ende einen Gewindeabschnitt (8) aufweist, der es ermöglicht, mit Hilfe einer Blockiermutter (9) gleichzeitig das Festspannen der beiden inneren Ringe (2, 3) gegen den Achsrohrträger (7) und die Montage des Achsrohres (4) im Achsrohrträger (7) zu bewirken, nachdem das bereits mit ihrem Wälzlager ausgerüstete Achsrohr (4) durch den Achsrohrträger (7) eingeführt worden ist.

2. Aufbau nach Anspruch 1, dadurch gekennzeichnet, daß der Sensor (11) radial oder achsparallel in einem Sensorträger (12) angeordnet ist, der direkt auf dem Achsrohr in der Verlängerung desselben befestigt ist.

3. Aufbau nach Anspruch 2, dadurch gekennzeichnet, daß der Sensorträger (12) durch einen Zapfen (13) verlängert ist und dazu dient, in die innere Bohrung des Achsrohres (4) eingebaut zu werden, wobei der Zapfen (13) an seinem Ende in einer elektrischen Steckerhülse (14) für einen Anschlußstecker (15) endet, der am Ende eines Verwindungskabels (16) befestigt ist.

4. Aufbau nach Anspruch 3, dadurch gekennzeichnet, daß ein Stopfen (17) aus Elastomer an das Verbindungskabel (16) angegossen oder angeklebt ist und seinen platz in der Bohrung des Achsrohres (4) einnimmt, vorzugsweise mit Hilfe eines axialen Rückhaltemittels (26).

5. Aufbau nach den Ansprüchen 2, 3 und 4, dadurch gekennzeichnet, daß die Befestigung des Sensorträgers (12) am Achsrohr (4) durch Einstecken seines Zapfens (13) in die Bohrung des Achsrohres, oder auch durch Einschrauben der Baugruppe in das Achsrohr oder auf das Ende desselben bewirkt wird.

6. Aufbau nach einem der vorhergehenden Ansprüche, dadurch gekennzeichnet, daß er ein umlaufendes (20) oder feststehendes (23) Verschlußkeil umfaßt, das den Raum zwischen der Nabe (1) und dem inneren Ring (2) der entsprechenden Seite ausfüllt, mit Ausnahme eines kleinen Zwischenraumes, der die relative Drehung der Elemente bei gleichzeitige Gewährleistung der Zurückhaltung des Schmierfettes des Wälzlagers ermöglicht.

7. Aufbau nach Anspruch 6, dadurch gekennzeichnet, daß das Verschlußteil (23) integrierender Bestandteil des Sensorträgers (12) ist.

8. Aufbau nach einem der vorhergehenden Ansprüche, dadurch gekennzeichnet, daß der Sensor (11) ein Radialsensor ist, und daß der lmpulsgeber (19) und die die Nabe (1) umchließende Verschlußkappe (18) nur ein einziges Teil bilden.

9. Aufbau nach einem der Ansprüche 1 bis 7, dadurch gekennzeichnet, daß der Sensor (11) ein achsparalleler Sensor und sein Impulsgeber (27) Bestandteil des Verschlußteils (20) ist, das dann ein umlaufendes Bauelement bildet.

10. Aufbau nach Anspruch 9, dadurch gekennzeichnet, daß das metallische Verschlußstück (20), in welches die Schlitze (27) zur Bildung des Impulsgebers eingeschnitten sind, in ein Bauteil (28) aus angegossenem Elastomer eingefügt ist, welches die Kontinuität des Abschlusses bewirkt und vorzugsweise eine Dichtungslippe (29) aufweist, die in Berührung mit dem inneren Ring (2) des Wälzlagers steht.

11. Aufbau nach einem der vorhergehenden Ansprüche, dadurch gekennzeichnet, daß die gesamte Montgeeinheit einschließlich des Achsrohres (4), des Sensors (11) und des Sensorträgers (12) sowie der Verschlußkappe (18) und weiterer möglicher Montageteile zum raschen Anbringen auf dem Stutzenträger (7) des Fahrzeugs mit Hilfe der Blockiermutter (9) im voraus zusammengebaut wird, wobei dann das Gewindeende (8) vorteilhafterweise ein Blockiermittel gegen Drehen aufweist, das beispielsweise aus Abflachungen (10) besteht.

## Claims

1. Hub assembly of a vehicle non-driven wheel equipped with a pulse emitter and receiver assembly for detecting the speed of the wheel, comprising an integrated bearing (1, 2, 3) with two rows of rolling elements located between two inner bearing races (2, 3) and one outer race (1) constituting the hub for fastening the wheel and possibly the brake disc, the internal free space of this hub (1) comprising both a pulse emitter (19, 20) and a sensor (11) enclosed in this free space with the aid of a closure cap (18), with, in addition, a means (9) for locking the set of two inner races (2, 3) onto the stub axle (4), characterised in that the stub axle (4) comprises, at its end located on the wheel (5) side, a shouldered collar (6) bearing on one (2) of the inner races, and, at its other end, a threaded part (8) allowing, with the aid of a lock nut (9), both the two inner races (2, 3) to be clamped against the stub axle holder (7), and the stub axle (4) to be mounted in this stub axle holder (7) after having inserted this stub axle (4) already equipped with its bearing, through the stub axle holder (7).

2. Assembly according to Claim 1, characterised in that the sensor (11) is arranged radially or parallel to the axis in a sensor holder (12) mounted directly on the stub axle in the extension of the latter.

3. Assembly according to Claim 2, characterised in that the sensor holder (12) is extended by a shank (13) intended to be mounted in the internal bore which the stub axle (4) comprises, this shank (13) being terminated at its end in a female electrical connector (14) for a connection plug (15) fixed to the end of a connection cable (16).

4. Assembly according to Claim 3, characterised in that a plug (17) made from elastomer is overmoulded or bonded onto the connection cable (16) in order to be placed in the bore of the stub axle (4) preferably with an axial retention means (26).

5. Assembly according to one of Claims 2, 3 and 4, characterised in that the sensor holder (12) is fastened onto the stub axle (4) by its shank (13) being push fitted into the bore of the stub axle, or furthermore by screwing the assembly into the stub axle or onto the outside of the latter.

6. Assembly according to one of the preceding claims, characterised in that it comprises a rotating (20) or stationary (23) closure piece filling the space between the hub (1) and the inner race (2) on the corresponding side, except for a small gap allowing the relative rotation of the elements whilst retaining the grease of the bearing.

7. Assembly according to Claim 6, characterised in that the closure piece (23) forms an integral part of the sensor holder (12).

8. Assembly according to one of the preceding claims, characterised in that the sensor (11) is of the radial type, and that the pulse emitter (19) and the closure cap (18) enclosing the hub (1) form only one and the same component.

9. Assembly according to one of Claims 1 to 7, characterised in that the sensor (11) is of the type parallel to the axis and that its pulse emitter (27) is integrated onto the closure piece (20) which is therefore of the rotating type.

10. Assembly according to Claim 9, characterised in that the metal closure piece (20) in which there are made cutouts (27) in order to constitute the pulse emitter, is inserted into an overmoulded elastomer component (28) ensuring continuity of closure and preferably comprising a sealing lip (29) in contact with the inner race (2) of the bearing.

11. Assembly according to one of the preceding claims, characterised in that the entire assembly, including the stub axle (4), the sensor (11) and the sensor holder (12), as well as the closure cap (18) and any other possible assembly components, is integrated in advance for rapid installation onto the stub axle holder (7) of the vehicle with the aid of the lock nut (9), the threaded end (8) then advantageously comprising an angular immobilisation means consisting, for example, of flats (10).
